# EUROPÄISCHE PATENTSCHRIFT

(11) **EP 4 276 422 B1**
(45) Veröffentlichungstag und Bekanntmachung des Hinweises auf die Patenterteilung: **04.02.2026**
(21) Anmeldenummer: 23173039.1
(22) Anmeldetag: 12.05.2023
(51) Int. Cl.: G01F 1/712, G01F 1/76, G01G 11/08, G01G 11/12, G05D 7/06, G01F 13/00, G01F 1/30

(54) **VERFAHREN ZUM BESTIMMEN EINES MASSENSTROMS UND FÖRDER- UND MESSEINRICHTUNG**
METHOD FOR DETERMINING A MASS FLOW AND CONVEYING AND MEASURING DEVICE
PROCÉDÉ DE DÉTERMINATION D'UN DÉBIT MASSIQUE ET DISPOSITIF DE TRANSPORT ET DE MESURE

(30) Priorität: 13.05.2022 DE 102022112046
(43) Veröffentlichungstag der Anmeldung: 15.11.2023
(73) Patentinhaber: CiTEX Holding GmbH, 49324 Melle (DE)
(72) Erfinder: Thiel, Marius, 49088 Osnabrück (DE)
(74) Vertreter: Bremer, Ulrich

(56) Entgegenhaltungen:
- CN-A- 101 285 697
- DD-A1- 229 908
- DE-A1- 10 103 854
- DE-A1- 4 414 715
- DE-T2- 69 226 204
- DE-U1- 20 101 509
- US-A1- 2011 198 197

## Beschreibung

Die Erfindung betrifft ein Verfahren zum Ermitteln eines Massenstroms sowie eine Förder- und Messeinrichtung. Weiterhin werden ein Regelverfahren und eine Produktionsanlage geschaffen.

Förderstrecken dienen im Allgemeinen zum Fördern von rieselfähigem Schüttgut, zum Beispiel Pellets, Granulat, Flocken oder Körnern und werden zum Beispiel in einer Produktionsanlage, zum Beispiel einem Extruder eingesetzt, um das Schüttgut kontinuierlich von einer Schüttgut-Zuführung zu der Verarbeitungseinrichtung zu fördern.

Das rieselfähige Schüttgut verteilt sich im Allgemeinen ungleichmäßig auf der Förderstrecke. Es wird zum Teil bereits diskontinuierlich oder stoßweise von der Schüttgut-Zuführung aufgenommen und bildet auf der Förderstrecke ungleichmäßige Materialansammlungen. Hierbei neigt das Schüttgut auch in Abhängigkeit seiner Materialeigenschaften und zum Beispiel von Temperatur und Feuchtigkeit zum Verklumpen. Eine genaue Kenntnis des Massenstroms ist jedoch für viele Anwendungen erforderlich, insbesondere bei einer Schüttgut-Zuführung zu einer Verarbeitungsanlage.

Bei einigen Förderstrecken ist weiterhin die Material- Fördergeschwindigkeit nicht genau bekannt, zum Beispiel bei Vibrationsförderern, Prallplatten und Schneckenförderern. Bei Bandförderern hängt die tatsächliche Bandgeschwindigkeit vom Schlupf an den Umlenkrollen ab, der wiederum z.B. von der Spannung des elastischen Förderbandes und der Belastung durch die Masse abhängt.

Zur Messung eines zugeführten Massenstroms sind gravimetrische Wagen bekannt, bei denen eine Fördereinrichtung mitsamt dem aufgenommenen Material gewogen wird, sodass ein Messwert kontinuierlich in Abhängigkeit der Zeit aufgenommen wird und der Massenstrom ermittelt werden kann. Die Genauigkeit solcher Systeme ist jedoch begrenzt.

Weiterhin sind Massenstrommessungen in einem Luftstrom bekannt, die insbesondere die Erfassung der Strömungsgeschwindigkeit ermöglichen, ohne jedoch den hierdurch beförderten Massenstrom genau zu erfassen.

Förderbandwaagen ermöglichen eine dynamische Messung einer Fördermenge auf einem Förderband, wobei das aufliegende Gewicht von einer Wägezelle als Funktion der Zeit ermittelt werden kann, sodass ein Massenstrom bestimmt werden kann.

Die DE3540165A1 beschreibt ein Verfahren und eine Vorrichtung zur Feindosierung von Schüttgütern, bei der ein Schüttgutstrom über Wägezellen erfasst wird. Auch EP0533968A1 und DE102005053352A1 beschreiben Messsysteme, bei denen über Wägezellen das Gewicht transportierter Massen erfasst wird.

DE4414715A1 zeigt ein Verfahren zur Bestimmung der Förderstärke einer Bandwaage und eine Vorrichtung zur Durchführung des Verfahrens. Hierbei sind wenigstens zwei Wägezellen in einem vorbestimmten Abstand vorgesehen sind, deren Wägesignal-Verlaufskurven bewertet werden, wobei die Bandgeschwindigkeit und der Abstand der Wägezellen berücksichtigt werden, um ein Fehlersignal auszugeben.

DD229908A1 zeigt eine Einrichtung zur Bestimmung eines Massenstroms, wobei aus Signalen masseempfindlicher Sensoren zum einen mittels eines Korrelationsalgorithmus eine Förderbandgeschwindigkeit und zum anderen durch Mittelwertbildung der Wert der Massebelegung des Förderbandes bestimmt wird. Durch multiplikative Verknüpfung von Förderbandgeschwindigkeit und Massebelegung ergibt sich der Massendurchsatz. Weiterhin erfolgt eine gegenseitige Überwachung der Sensoren, um einen Ausfall anzuzeigen.

In DE10103854A1 ist eine Messvorrichtung zur Ermittlung eines kontinuierlichen Massenstroms von rieselfähigen Schüttgütern beschrieben, die aus zwei modulartig ausgebildeten Wendelschurrenteilen besteht, die jeweils auf drei Wägezellen abgestützt sind. Jedes Wendelschurrenteil besteht aus einer nach unten geneigten Wendel auf die ein kontinuierlicher Massenstrom aufgegeben wird. Beim Durchlauf eines Schüttgutstromes wird mit Hilfe der Wägezellensignale sowohl die Wendelbelastung als auch die Fließgeschwindigkeit ermittelt und hieraus die Förderstärke und/oder die Fördermenge berechnet.

DE69226204T2 zeigt eine Vorrichtung zum Wiegen kontinuierlich strömenden, körnigen oder pulverförmigen Materials, bei welcher der Massenstrom des Materials als eine Funktion von Messungen von Kräften bestimmt wird, die auf eine geneigte erste Platte ausgeübt werden, die im Wesentlichen geradlinig in der Strömungsrichtung liegt und auf die das strömende Material gleitend strömt, wobei Kraftmessmittel die Platte stützen und vermessen.

DE 20101509U1 beschreibt eine Messvorrichtung zur Ermittlung eines kontinuierlichen Massenstroms von fließfähigen Gütern, bei dem rieselfähige Schüttgüter mit einer nach unten geneigten schurrenartigen Förderrinne, über die der Massenstrom geleitet wird, gemessen werden, wobei die Förderrinne aus mindestens zwei nacheinander angeordneten gleichartigen Teilen besteht und sich jeder Rinnenteil auf mindestens einer Wägezelle abstützt, wobei aus den Wägezellensignalen zumindest die Rinnenbelastung und die Fließgeschwindigkeit ermittelt werden.

US 2011/0198197A1 beschreibt ein Verfahren zum Aufnehmen und Verarbeiten von Polymer-Pulver, bei dem ein Einlass einer Förderschraube und ein oder mehrere Masse-Messeinrichtung vorgesehen sind, wobei zumindest in einem Teil der Förderschraube eine Masse des geförderten Polymer-Pulvers gemessen wird.

Weiterhin beschreibt die CN 101285697A ein Förderband mit Wägezellen.

Der Erfindung liegt daher die Aufgabe zugrunde, ein Verfahren und eine Förder-Messeinrichtung zu schaffen, die eine genaue Bestimmung eines Massenstroms ermöglichen.

Diese Aufgabe wird durch ein Verfahren und eine Förder- und Messeinrichtung nach den unabhängigen Ansprüchen gelöst. Die Unteransprüche beschreiben bevorzugte Weiterbildungen. Weiterhin werden ein Regelverfahren unter Verwendung des Verfahrens sowie eine Produktionsanlage geschaffen. Das erfindungsgemäße Verfahren zum Ermitteln eines Massenstroms kann insbesondere in der erfindungsgemäßen Förder- und Messeinrichtung durchgeführt werden.

Somit wird der Massenstrom auf der Förderstrecke durch eine Wägezellen-Anordnung aus mehreren, in Förderrichtung aufeinanderfolgenden Wägezellen zeitlich erfasst. Durch die Wägezellen werden räumlich und zeitlich aufgelöste Messwerte erhalten, d.h. insbesondere diskrete Messwerte entsprechend der Anordnung der einzelnen Messzellen. Somit können Messwerte der aufeinanderfolgenden Wägezellen miteinander verglichen oder in Beziehung gesetzt werden. Insbesondere können die Messwerte der in Förderrichtung aufeinander folgenden Wägezellen miteinander unter Berücksichtigung eines zeitlichen Versatzes bzw. einer Zeitdifferenz verglichen werden. Aus diesem Vergleich kann direkt oder indirekt auf den Massenstrom geschlossen werden.

Anders als z.B. bei Förderbandwaagen erfolgt somit ein Vergleich mehrerer Messwerte in Abhängigkeit einer Position und Zeit, d.h. insbesondere auch von mehreren Positionen, um daraus einen Massenstrom zu ermitteln.

Dem liegt die Erkenntnis zugrunde, dass sich bei der Förderung des Schüttguts Strukturen als unterschiedliche Massewerte der einzelnen Wägezellen ausbilden, die insbesondere durch Anhäufungen und ungleichmäßige Verteilung entstehen, wobei diese Strukturen beim Transport in der Förderrichtung grundsätzlich erhalten bleiben oder ggf. in erkennbarem Maße abgeändert werden. Somit kann ein räumlich-zeitlicher Vergleich durchgeführt werden, bei dem räumliche Messwert-Folgen bzw. Muster mit räumlich und zeitlich nachfolgenden Messwert-Folgen bzw. Mustern verglichen werden. Dies kann insbesondere durch eine Art Autokorrelation bzw. Autokorellation erfolgen. Aus diesem Vergleich kann erkannt werden, dass die Materieansammlung in der Zeitdifferenz über die entsprechende Strecke, die sich aus dem geometrischen Abstand der Wägezellen ergibt, transportiert wurde. Somit ermittelt die Messzellen-Anordnung vorzugsweise zum einen die Masse in den einzelnen Wägezellen, und weiterhin die Fördergeschwindigkeit. Aus diesen beiden Werten kann somit der Massenstrom ermittelt werden.

Somit werden bereits einige Vorteile erreicht. Die mehreren Wägezellen bilden eine relativ einfache, kostengünstige, genaue und robuste Sensorik, die den Massenstrom und die Förderstrecke nicht weiter beeinträchtigt, anders als z.B. bei gravimetrischen oder volumetrischen Dosierungen. Aus den Messwerten kann direkt auf die in der Wägezelle aufgenommene Masse geschlossen werden, ohne zum Beispiel Umrechnungen von einem Volumen auf eine Masse durchführen zu müssen, wie es bei volumetrischen Messungen zum Teil erforderlich ist.

Das Verfahren kann kontinuierlich während der Förderung und der Produktion durchgeführt werden. Grundsätzlich ist keine Anfangs-Kalibrierung erforderlich, da die fortlaufend aufgenommenen Messignale und Messwerte miteinander verglichen werden können. Hierbei kann sowohl die Fördergeschwindigkeit als auch die mit dieser Fördergeschwindigkeit transportierte Masse des Schüttguts ermittelt werden, sodass eine genaue Bestimmung des Massenstroms ermöglicht wird.

Gegenüber gravimetrischen Dosierungen entfällt die Wägung der gesamten Dosiervorrichtung oder eines Speichers bzw. Wagenbehälters. Gegenüber Materialstrommessungen in einem Luftstrom kann nicht nur eine Geschwindigkeit, sondern mit hoher Genauigkeit der mit der Geschwindigkeit geförderte Massenstrom ermittelt werden.

Der "Vergleich" bedeutet nicht unbedingt, dass räumlich verschobene Strukturen oder Muster auf Identität überprüft werden, da die Materialverwerfungen sich auch etwas ändern können. Unter einem Vergleich wird vielmehr die Bestimmung gleicher oder ähnlicher Strukturen verstanden. Zur Auswertung kann insbesondere eine Korrelation, d.h. insbesondere eine Autokorrelation des Messignals erfolgen, bei dem das Messignal z.B. zu mehreren Zeitpunkten mit sich selbst korreliert wird, insbesondere zu mehreren Zeitpunkten und mit unterschiedlichen Strecken-Verschiebungen. Ein derartiger Vergleich kann selbsttätig in einem Programm beziehungsweise Auswerteverfahren durchgeführt werden, bis eine hohe Signifikanz beziehungsweise hohe Autokorrelation ermittelt wird. Insbesondere eine Autokorrelation ermöglicht einen Vergleich ähnlicher, nicht genau identischer Strukturen Ein weiterer Vorteil der Erfindung liegt darin, dass durch das Materialtracking Beladungsstörung wie z.B. feste Materialanhaftungen an Waagenelementen und zeitlich Träge Sensordrifts, z.B. Tara-Verschiebungen usw. festgestellt und kompensiert werden können.

Die Messzellen-Anordnung kann als eindimensionales Zeilen-Array, d.h. als eindimensionale Messzellen-Matrix ausgebildet sein oder auch als mehrdimensionale Messzellen-Matrix, bei der zusätzlich in einer seitlichen bzw. zu der Transportrichtung versetzten Richtung ein oder mehrere weitere Wägezellen vorgesehen sind.

Somit erfolgt vorzugsweise eine Diskretisierung des Massenstroms in die einzelnen Messwerte. Diese Diskretisierung kann mechanisch erfolgen, d.h. z.B. durch Unterteilung in Massen-Pakete mittels des jeweiligen Förderorgans, und/oder sensorisch, d.h. durch die partielle Messung eines Teils des Massenstroms über die einzelnen Messzellen.

Gemäß einer Ausführungsform wird die Messzellen-Anordnung als Beschichtung oder Teil einer Beschichtung ausgebildet, die somit an der Fördereinrichtung an geeigneten Stellen, insbesondere am statischen Gehäuse und/oder an beweglichen Teilen, angebracht wird. Eine derartige Beschichtung, z.B. als Sensorfolie mit einzelnen Messzellen, ist kostengünstig und standardisiert herstellbar, z.B. mit Dehnungsmessstreifen oder Piezofolien, und flexibel anbringbar.

Die Übertragung der Messwerte und der Energie von und zu den Messzellen kann drahtgebunden oder auch drahtlos, z.B. als NFC (Near Field Communication) und/oder mittels passiver Transponder erfolgen, so dass insbesondere auch ein Einsatz an den beweglichen Elementen möglich ist.

Die Fördergeschwindigkeit kann ergänzend oder alternativ auch durch weitere Daten, z.B. eine bekannte oder korrigiert Bandgeschwindigkeit, ermittelt werden.

Somit wird ein Verfahren geschaffen, dass mit geringem Aufwand, insbesondere einer kostengünstigen und sicheren Messzellen-Ausbildung eine sichere, Flexible, schnelle und genaue Ermittlung ermöglicht.

Das erfindungsgemäße Verfahren kann insbesondere in einer Regelung beziehungsweise ein Regelverfahren eingesetzt werden, sodass in Abhängigkeit des ermittelten Massenstroms eine Material-Zuführung und/oder eine nachfolgende Produktionsanlage beziehungsweise Verarbeitungseinrichtung angesteuert wird. Somit kann zum Beispiel durch Ansteuerung der Material-Zuführung der Massenstrom geregelt werden, insbesondere auf einen konstanten Wert. Weiterhin kann auch eine nachfolgende Verarbeitungseinheit, zum Beispiel ein Extruder angesteuert werden, sodass er den ermittelten Massenstrom geeignet aufnimmt, zum Beispiel durch Ansteuerung der Extruderschnecke oder eines Abziehers der Extruder-Anlage.

Somit ist eine Regelung des Massenstroms möglich, ohne dass zwingend in einem "loss in Weight"-Verfahren mit diskreten und bekannten Initial-Massen gearbeitet werden muss. Vorzugsweise ist eine optimierte Regelung möglich, da die unterschiedlichen "Beladungszustände" über den Fördervorschub schon vor der Materialabgabe bekannt sind. Es ist somit nicht erforderlich, erst die Materialausgabe und gegebenenfalls das erzeugte Produkt zu vermessen; vielmehr wird bereits bei der Förderung der Massestrom ermittelt, sodass eine vorrausschauende Regelung ermöglicht ist.

Entsprechend wird eine Förder- und Messeinrichtung ausgebildet, die mit dem erfindungsgemäßen Verfahren betrieben werden kann. Hierbei sind unterschiedliche Anwendungen möglich. In einem Bandförderer können die Wägezellen direkt unter dem Förderband oder in dieses integriert angeordnet werden, sodass aufgrund des flexiblen Förderbandes genaue Messungen möglich sind. In einem Schneckendosierer können die Wägezellen zum einen im Bodenbereich, weiterhin auch seitlichen Bereichen beziehungsweise in Umfangsrichtung oder Schraubenrichtung neben den weiteren Wägezellen angeordnet werden, da der Schneckendosierer das Material auch seitlich nach außen und nach oben drückt. Somit folgen die Wägezellen z.B. in Schraubenrichtung aufeinander.

Die Förderstrecke kann insbesondere ausgebildet sein als einer der folgenden Förderer:
- als Vibrationsförderer, bei dem die mehreren Wägezellen in den von einer Rütteleinrichtung angesprochenen Plattenelementen oder als Plattenelemente vorgesehen sind,
- als Prallplatten-Förderer mit einer schräg abfallenden Prallplatte, wobei die Messzellen unter der Prallplatte oder in diese integriert vorgesehen sind.

Beim Einsatz in einem Prallplatten-Förderer können zum einen die Impulse der Materialpartikel aus der definierten Höhe auf den vorderen Bereich der Prallplatte gemessen und in eine Partikelmasse umgerechnet werden. Weiterhin kann das Abrutschverhalten durch mehrere, in der Förderrichtung bzw. Abrutschrichtung aufeinander folgende Wägezellen im weiteren Verlauf der Prallplatte ermittelt werden, sodass die direkte Materialzuführung und der Massenstrom in Abrutschrichtung erfasst und ausgewertet werden können.

Bei einem Vibrationsförderer können die Wägezellen direkt in den Vibrationsplatten angeordnet werden und somit den Materialwert des Schüttguts sowie die Beschleunigungen durch die Anregung beziehungsweise Vibration erfassen. Die durch die Vibrations-Anregung erzeugten Kräfte können hierbei als bekannt beziehungsweise mit bekanntem zeitlichem Signal abgezogen werden, um genaue Messungen zu ermöglichen.

Bei Vibrations-Förderern und Prallplatten-Förderern kann somit jeweils aufschlagendes Material als Stoß ermittelt werden.

Grundsätzlich können das erfindungsgemäße Verfahren und die erfindungsgemäße Einrichtung bei sämtlichen Fördersystemen ausgebildet werden, indem die Wägezellen beziehungsweise eine Mess-Matrix aus den Wägezellen als zusätzliche Einheit, z b als Beschichtung eingesetzt wird, um den Materialfluss über den Ort und über die Zeit zu messen und bewerten zu können.

Vorteilhafterweise geben die einzelnen Wägezellen nur gering unter der Materiebelastung nach, sodass sie den Massenstrom nicht oder vernachlässigbar beeinträchtigen; dies kann z.B. durch den Einsatz von Piezo-Kraftsensoren oder Dehnungsmessstreifen erfolgen, die kostengünstig ausbildbar sind und nur wenig in Richtung der Belastung nachgeben.

Als Schüttgut kann zum einen ein Kunststoffmaterial, z.B. Polyethylen, Polypropylen oder PVC, oder Gummimaterial zugeführt werden, wobei es z.B. als Pellets, Granulat, Pulver oder Flocken zugeführt wird. Weiterhin kann ergänzend als Schuttgut ein Additiv zugeführt werden, z.B. Ruß, Bariumsulfat oder Kalziumkarbonat, insbesondere als Granulat, Pulver oder Pellets. Hierbei kann der Massenstrom des Kunststoff-Materials und/oder Gummi-Materials und/oder der Massenstrom des Additivs vermessen und geregelt werden. Es zeigt sich, dass das erfindungsgemäße Verfahren insbesondere für die Dosierung derartiger Materialien vorteilhaft ist, insbesondere bei der Zuführung zu einer Extrusionsanlage, da die geförderten Massenströme von ihren Eigenschaften wie z.B. ihrer Dichte und Konsistenz her gut in der Förderstrecke mit den mehreren Wägezellen messbar sind.

So kann insbesondere auch der Massenstrom der verschiedenen Komponenten, d.h. z.B. Kunststoffmaterial und Additiven, über entsprechende Förderstrecken genau und insbesondere schnell bezüglich dynamischer Änderungen gemessen und geregelt werden, um eine Extrusion fehlerhafter Produkte zu vermeiden, die ansonsten oftmals erst nachträglich durch z.B. einen Aschetest vermessen werden können.

Die Wägezellen können als Piezosensoren und/oder Dehnungsmessstreifen ausgebildet sein. Zumindest einige der Messzellen der Wägezellen-Anordnung können als Beschichtung oder Teil einer Beschichtung ausgebildet sein, z.B. als Sensorfolie mit einzelnen Messzellen.

Die mehreren Wägezellen können angeordnet sein als eindimensionales Zeilenarray, d.h. insbesondere eindimensionale Matrix, oder mehrdimensionale Matrix, mit in Förderrichtung aufeinanderfolgenden Wägezellen.

Eine Übertragung der Messwerte und/oder von Energie von und zu den Messzellen kann drahtlos, z.B. als NFC (Near Field Communication) und/oder mittels passiver Transponder vorgesehen sein.

Die Auswerteeinrichtung der Förder- und Messeinrichtung ist vorzugsweise dazu ausgebildet, eine Struktur oder Messwert-Folge von räumlich aufeinander folgenden Messwerten einer ersten Messung zu einem ersten Zeitpunkt zu vergleichen mit mindestens einer Struktur oder Messwert-Folge einer zweiten Messung zu einem zweiten Zeitpunkt,
und aus dem Vergleich, insbesondere einer Übereinstimmung, einen Abstandswert oder räumlichen Versatz der beiden Strukturen oder Messwert-Folgen zu ermitteln.

Die Erfindung wird im Folgenden anhand der beiliegenden Zeichnungen an einigen Ausführungsformen erläutert. Es zeigen:
- Fig. 1: eine Förder- und Messeinrichtung gemäß einer Ausführungsform;
- Fig. 2: Messignale der Sensorkanäle zu aufeinander folgenden Mess-Zeitpunkten;
- Fig. 3: eine Ausbildung als Bandförderer, die nicht als Teil der Erfindung beansprucht ist;
- Fig. 4: ein Schneckendosierer, der nicht Teil der beanspruchten Erfindung ist;
- Fig. 5: eine Ausführungsform mit Vibrationsförderer;
- Fig. 6: eine Ausführungsform mit Prallplatten-Förderer; und
- Fig. 7: eine Ausführungsform mit Zellradförderer.

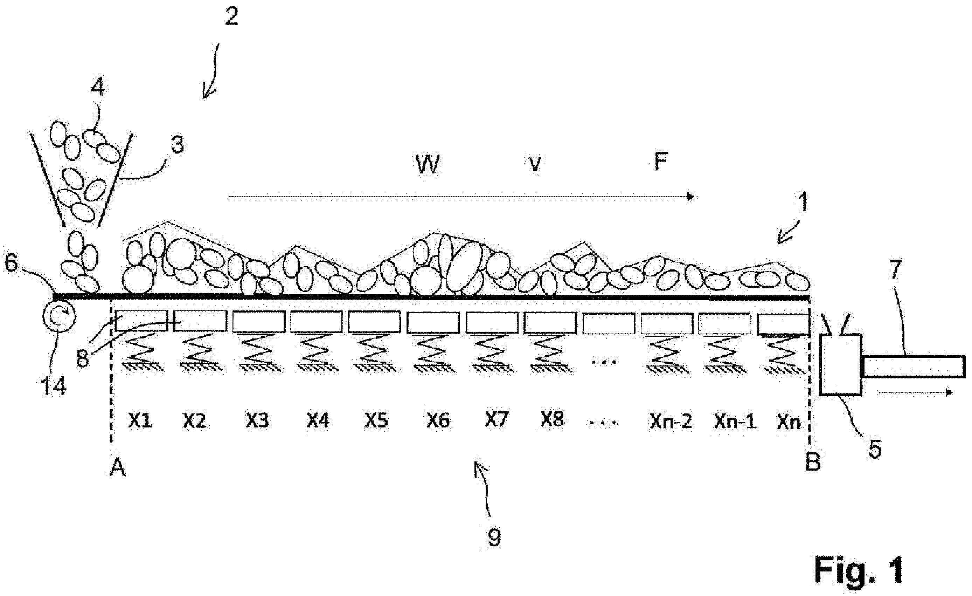

Gemäß Figur 1 ist eine Förderstrecke 1 in einer Produktionsanlage 2 vorgesehen. Die Produktionsanlage 2 weist zum Beispiel eine Schüttgut-Zuführung 3 mit einem Auffang-Trichter zum Zuführen von rieselfähigem Schüttgut 4 auf. Als Schüttgut 4 können zum Beispiel Pellets, Granulat, Pulver oder Flocken zugeführt werden. Das Schüttgut 4 gelangt somit zu der Förderstrecke 1 und wird auf der Förderstrecke 1 von einem oder mehreren Anfangspunkten A in Förderrichtung F zu einem Endpunkt B gefördert, zum Beispiel zu einer Verarbeitungseinheit 5, z.B. einem Extruder, der ein Verarbeitungsprodukt 7 ausgibt. Die Schüttgut-Zuführung 3 und Verarbeitungseinheit 5 sind hierbei beispielhaft, da grundsätzlich eine Förderung des Schüttguts 4 auch zu anderen Zwecken vorgesehen sein kann.

An der Förderstrecke ist eine Wägezellen-Matrix 9 aus Wägezellen 8 vorgesehen, die in Fig. 1 entlang der Förderrichtung F mit X1 bis Xn bezeichnet sind. Bei dieser Ausführungsform ist die Wägezellen-Matrix 9 als Zeilen-Array, das heißt als eindimensionale Anordnung der Wägezellen X1 bis Xn ausgebildet, die direkt in Förderrichtung F aufeinander folgen. Bei anderen Ausführungsformen können auch zwei- oder mehrdimensionale Arrays vorgesehen sein, das heißt mit zwei oder mehr Wägezellen in der zur Zeichenebene senkrechten Tiefenrichtung.

Jede Wägezelle Xi, i=1n misst das auf dem Förderband 6 einwirkende Gewicht als Messwert Mi, i=1 bis n. Die Wägezellen X1 bis Xn sind vorteilhafterweise direkt unter dem Förderband 6, ohne weitere statische Unterstützung des Förderbandes 6 nach unten, vorgesehen, um einen möglichst genauen Messwert Mi zu liefern. Die Wägezellen X1 bis Xn können aber auch z.B. im Material des Förderbandes 6 integriert sein.

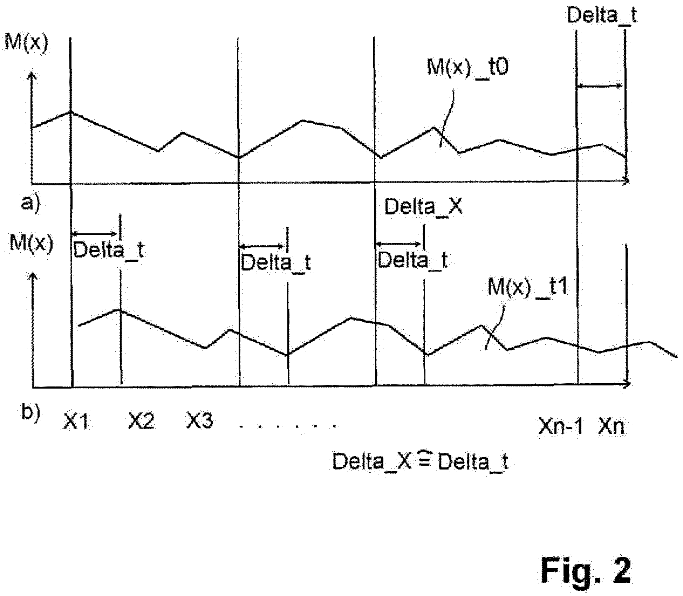

Figur 2 zeigt in zwei Diagrammen a) und b) jeweils den Messwert M in Abhängigkeit der Ortskoordinate X entlang der Förderrichtung F, d.h. als M(x). Die Messwerte M(x) ändern sich hierbei zeitlich; das obere Diagramm a) zeigt die Messwerte M(x) zu einem Zeitpunkt t0; das untere Diagramm b) zeigt die Messwerte M(x) zu einem nachfolgenden Zeitpunkt t1 = t0 + Delta-t, d.h. um Delta-t später. Wie aus Fig. 1 ersichtlich ist, liegt das Schüttgut 4 auf dem Förderband 6 nicht gleichmäßig auf, sondern bildet in Förderrichtung F spezifische Verwerfungen und Verklumpungen. Somit unterscheiden sich im oberen Diagramm a) der Fig. 2 die einzelnen Messwerte M(x) bzw. M1- Mn entsprechend dem Muster der Verwerfungen; es bildet sich ein spezifisches Muster aus.

Beim Transport des Schüttguts 4 über das Förderband 6 erfolgt, je nach Ausbildung der Förderstrecke 1, zunächst nur eine geringe Änderung der Verwerfungen und somit nur eine geringe Umschichtung der Material- Ansammlungen des Schüttguts 4. Somit wird die in Figur 1 gezeigte Masse-Ausbildung bzw. das Muster entlang der Förderrichtung F weiter gefördert.

Wie aus den Diagrammen a) und b) zu entnehmen ist, werden somit die charakteristischen Ausbildungen der Verwerfungen bzw. Muster oder Masse-Ansammlungen mit der Zeit weiter transportiert, sodass die Folge von Messwerte Mi bzw. M(x) im Wesentlichen konstant bleibt, aber über die Messkanäle in Förderrichtung F weiterverschoben wird. Die Zeitdifferenz Delta-t zwischen Diagramm a) und b) entspricht somit einer Kanal-Differenz beziehungsweise einem Abstandswert Delta-X in den Signaldiagrammen der Figur 2. Hierbei ergibt der Zusammenhang zwischen Delta-x und Delta-t die Fördergeschwindigkeit v, d.h. v= Delta-x / Delta-t. Diese Fördergeschwindigkeit v kann somit mit einer höheren Genauigkeit ermittelt werden als z.B. eine aus der Drehzahl der Umlenkwalzen 14 grob abgeleitete Bandgeschwindigkeit, da die tatsächliche Bandgeschwindigkeit gegebenenfalls vom Schlupf an den Umlenkrollen abhängt, der abhängig von der Spannung des elastischen Förderbandes und der Belastung durch die Masse auftritt.

Aus Figur 2 wird eine Korrelation der Messwerte zum Zeitpunkt t0 und t1 gebildet, das heißt eine Autokorrelation des Messignals M(X), über verschiedene Abstandswerte Delta-X, bis die höchste Signifikanz ermittelt wird. Somit erfolgt in Figur 2 eine eindimensionale Autokorrelation. Je nach Ausbildung als Zeilen-Array oder mehrdimensionale Matrix kann z.B. auch eine 2D-Autokorrelation durchgeführt werden.

Somit kann aus dem Messignal Mi(t) zum einen direkt die Masse in den einzelnen Kanälen X1-Xn erfasst werden und zum anderen die Fördergeschwindigkeit v über die Förderstrecke 2 ermittelt werden. Somit kann aus diesen beiden Informationen der Massenstrom W(t) des Schüttguts 4 als Funktion der Zeit t erfasst werden.

Somit kann insbesondere in Abhängigkeit dieser Ermittlung eine Regelung oder Steuerung erfolgen. Insbesondere kann somit eine Messung des Massenstroms W(t) über die Förderstrecke 2 erfolgen, und in Abhängigkeit des Massenstroms W(t) die Schüttgut-Zuführung 3 angesteuert werden, um den Massenstrom W(t) zu regeln. Weiterhin kann auch die Verarbeitungseinheit 5 angesteuert werden, um den jeweiligen Massenstrom W(t) aufzunehmen.

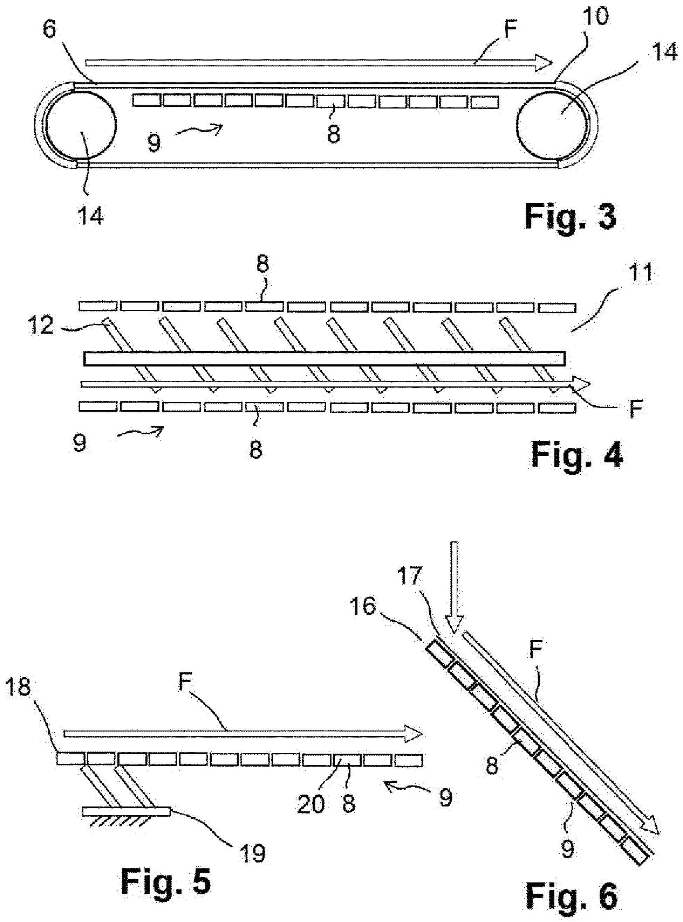

Die Figuren 3 bis 6 zeigen Ausführungen verschiedener Förderstrecken 1: In Fig. 3 ist ein Bandförderer 10 gezeigt, der als solches nicht Teil der beanspruchten Erfindung ist, bei dem aber das Messprinzip der Figur 1 direkt umgesetzt werden kann, d.h. die Wägezellen 8 sind insbesondere unter dem Förderband 6 vorgesehen, da das Förderband 6 das einwirkende Gewicht direkt zu den Wägezellen 8 weitergibt. Hier können somit die Umlenkrollen 14 angesteuert werden, um die Bandgeschwindigkeit zu ändern.

In Fig. 4 ist ein Schneckendosierer 11 gezeigt, der als solches nicht Teil der beanspruchten Erfindung ist, jedoch zur Veranschaulichung des Messprinzips dient, bei dem Wägezellen 8 in Umfangsrichtungen verteilt, d.h. sowohl unterhalb der Förderschnecke 12, als auch an weiteren Stellen des Umfangs, d.h. seitlich und auch oberhalb vorgesehen sein können, da beim Schneckendosierer11 das Schüttgut 4 radial nach außen gedrückt wird und somit am Umfang gemessen werden kann. Somit kann hier ein mehrdimensionales Messzellen-Array 9 vorgesehen sein. Bei diesem Schneckendosierer11 können somit aufeinander folgende Sensorkanäle in Schraubenrichtung erfasst werden, das heißt aufeinander folgend mit Versatz in Förderrichtung F und Umfangsrichtung entsprechend der schraubenförmigen beziehungsweise spiralförmigen Förderbewegung.

Figur 5 zeigt einen Vibrationsförderer 18 beziehungsweise eine Rüttelplatte, bei der die Wägezellen 8 direkt in den von der Rütteleinrichtung 19 angesprochenen Plattenelementen 20 vorgesehen sein können, bzw. die Wägezellen 8 dienen direkt als Plattenelemente 20 und nehmen somit den Messwert Mi direkt auf. Zusätzlich zu dem Gewicht werden die Vibrationen erfasst, die zunächst hohe Beiträge liefern, die das Messergebnis beeinträchtigen; sie können aber als bekannt beziehungsweise mit bekanntem zeitlichem Signal abgezogen werden, um genaue Messungen zu ermöglichen.

Gemäß Figur 6 ist ein Prallplatten-Förderer 16 gezeigt, bei dem Schüttgut 4 auf einer Prallplatte 17 aufgefangen wird und über die Prallplatte 17 nach unten rutscht. Hier können entsprechende Wägezellen 8 direkt unter der flexibel ausgebildeten Prallplatte 17 vorgesehen sein.

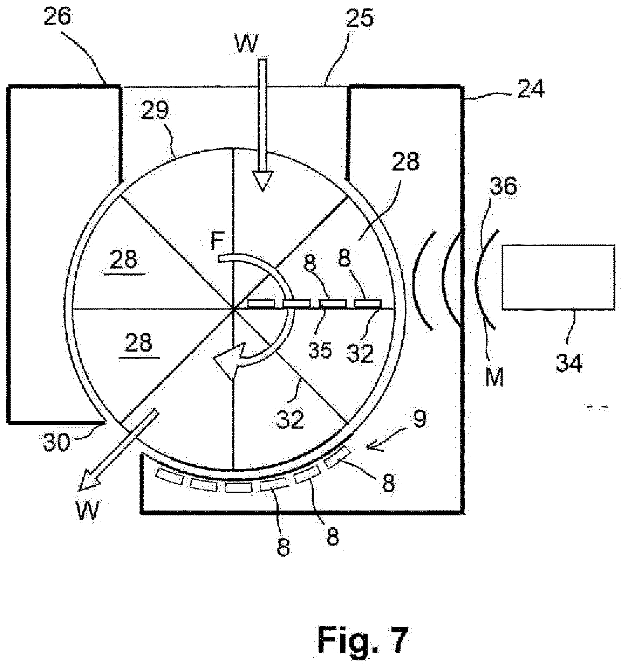

Fig. 7 zeigt eine Ausführungsform mit einem Zellradförderer 24, der als Rotationsförderer einen Massestrom W an einem oberen Eingang 25 seines Gehäuses 26 aufnimmt, über einzelne Zellen 28 seiner rotierenden Trommel 29 fördert und bei einem Ausgang 30 ausgibt. Hier können die Messzellen 8 zum einen am Gehäuse 26 vorgesehen sein, z.B. gemäß Fig. 7 an einer unteren Position bzw. 180°-Position des Gehäuses 26, bei der das Schüttgut 2 unten am Gehäuse 26 aufliegt. Weiterhin oder alternativ hierzu können die Messzellen 8 an einem Flügelelement 32 der rotierenden Trommel 29 vorgesehen sein, z. B bei einer 90° Position, bei der das Schüttgut 2 auf dem horizontalen Flügelelement 32 aufliegt.

Bei dieser wie auch bei den anderen Ausführungsformen kann die Übertragung der Messwerte M und der Energie zwischen den Messzellen 8 und einer Sende- und Empfangseinheit 34 bei rotierenden oder beweglichen Teilen auch als drahtlose Signale 36, z.B. über NFC Technologie bzw. Ausbildung der Messzellen 8 als passive Transponder erfolgen.

Die Messzellen-Anordnung 9 als Beschichtung 35 oder Teil einer Beschichtung 35 ausgebildet sein, die somit an geeigneten Stellen, insbesondere am statischen Gehäuse und/oder an beweglichen Teilen, angebracht ewrden kann. So kann eine derartige Beschichtung 35 z.B. in Fig. 7 auf einem Flügelelement 32, oder auch in Fig. 6 auf der Prallplatte 17 vorgesehen sein.

### Bezugszeichenliste

- 1: Förderstrecke
- 2: Produktionsanlage
- 3: Schüttgut-Zuführung (z.B. Auffang-Trichter)
- 4: Schüttgut
- 5: Verarbeitungseinheit, zum Beispiel Extruder
- 6: Förderband
- 7: Verarbeitungsprodukt
- 8: Wägezelle
- 9: Wägezellen-Matrix, z.B. Wägezellen-Array

- 10: Bandförderer
- 11: Schneckenförderer
- 12: Förderschnecke
- 14: Umlenkrollen des Bandförderers
- 16: Prallplatten-Förderer
- 17: Prallplatte

- 18: Vibrationsförderer
- 19: Rüttler, Vibrations-Erzeuger
- 20: Plattenelemente
- 24: Zellradförderer
- 25: oberer Eingang des Gehäuses 26
- 26: Gehäuses
- 28: Zellen des Zellradförderers 24
- 29: Trommel
- 30: Ausgang des Gehäuses 26
- 32: Flügelelement
- 34: Sende- und Empfängereinheit
- 35: Beschichtung, z.B. Sensorfolie
- 36: drahtlose Signale

- A: Anfangspunkt
- B: Endpunkt
- M1 ..Mn: Messwerte
- Xi, i=1n: Wägezellen, Messkanäle
- F: Förderrichtung
- V: Fördergeschwindigkeit
- W: Massenstrom

- t0: erster Zeitpunkt
- t1: zweiter Zeitpunkt
- Delta-t: Zeitdifferenz zwischen t0 und t1
- Delta-X: Abstandswert, räumlicher Versatz

## Patentansprüche

1. Verfahren zum Bestimmen eines Massenstroms (W) aus Schüttgut (4) in einer Förderstrecke (1), mit folgenden Schritten:
- Bereitstellen einer Förderstrecke (1) mit einer Wägezellen-Anordnung (9) aus mehreren, in einer Förderrichtung (F) aufeinanderfolgenden Wägezellen (8; X1 - Xn), (ST1),
- kontinuierliches Aufnehmen von Schüttgut (4),
- Fördern des Schüttguts (4) auf der Förderstrecke (1) in der Förderrichtung (F) über die mehreren Wägezellen (8),
- Ausgeben des Schüttguts (4) an einem Endpunkt (B) der Förderstrecke (1) (ST2),
- Ausgeben von Messwerten (Mi,t, i=1 - Mn) der einzelnen Wägezellen (8) in Abhängigkeit der Zeit (t) (ST3),
- Auswerten mit Vergleichen von Messwerten (Mi,t) in Abhängigkeit der Zeit (t) und einer Position der Wägezellen (8, Xi) in Förderrichtung (F),
- Ermitteln eines Massenstroms (W) aus der Auswertung (ST5),
**dadurch gekennzeichnet, dass**
die Förderstrecke ausgebildet ist als ein Element aus der Gruppe, die gebildet ist aus
- einem Prallplatten-Förderer (16), wobei Wägezellen (8) unter der Prallplatte (17) und/oder in dieser integriert vorgesehen sind,
wobei Messwerte (M) einer vorderen Wägezelle (8) zur Ermittlung einer Partikelmasse des auftreffenden Materials verwendet werden und weiterhin aus den nachfolgenden Wägezellen (8) das Abrutschverhalten als Fördergeschwindigkeit (v) ermittelt wird (alter A7),
- einem Vibrationsförderer (18), bei dem die mehreren Wägezellen (8) in den von einer Rütteleinrichtung (19) angesprochene Plattenelementen (20) oder als Plattenelemente (20) vorgesehen sind,
- einem Zellradförderer (24), der als Rotationsförderer einen Massestrom (W) an einem oberen Eingang (25) seines Gehäuses (26) aufnimmt, über einzelne Zellen (28) seiner rotierenden Trommel (29) fördert und bei einem Ausgang (30) ausgibt, wobei die Messzellen (8) an einem Gehäuse (26) und /oder an einem Flügelelement (32) seiner rotierenden Trommel (90) vorgesehen sind.

2. Verfahren nach Anspruch 1, **dadurch gekennzeichnet, dass** Abstandswerte (Delta - X) der Wägezellen (Xi) in Förderrichtung (F) zueinander in die Ermittlung einbezogen werden.

3. Verfahren nach Anspruch 1 oder 2, **dadurch gekennzeichnet, dass** bei dem Vergleichen der Messwerte (M(x,t))
- eine Struktur oder Messwert-Folge von räumlich aufeinander folgenden Messwerten (Mi,t) einer ersten Messung zu einem ersten Zeitpunkt (t0) verglichen wird mit
- mindestens einer Struktur oder Messwert-Folge von räumlich aufeinander folgenden Messwerten (Mi,t) einer zweiten Messung zu einem zweiten Zeitpunkt (t1),
und aus dem Vergleich, insbesondere einer Übereinstimmung, ein Abstandwert (Delta-x) der beiden Strukturen oder Messwert-Folgen ermittelt wird, und
aus dem Abstandswert (Delta-x) und der Zeitdifferenz (Delta-t) zwischen dem ersten Zeitpunkt (t0) und dem zweiten Zeitpunkt (t1) der Massenstrom (W) ermittelt wird.

4. Verfahren nach Anspruch 3, **dadurch gekennzeichnet, dass** aus dem Abstandswert (Delta-x) und der Zeitdifferenz (Delta-t) zunächst eine Fördergeschwindigkeit (V) und
aus der Fördergeschwindigkeit (V) und den Messwerten (M) nachfolgend der Massenstrom (W) ermittelt wird.

5. Verfahren nach einem der vorherigen Ansprüche, **dadurch gekennzeichnet, dass** zu mindestens zwei Zeitpunkten (t0, t1) jeweils eine ein- oder mehrdimensionale Matrix aus Messwerten (Mi) erstellt wird, und
aus den mindestens zwei Matrizes eine Mustererkennung und/oder eine Korrelation, insbesondere eine Autokorrelation, durchgeführt wird, um Übereinstimmung in den Strukturen oder Messwert-Folgen zu ermitteln.

6. Verfahren nach Anspruch 5, **dadurch gekennzeichnet, dass** bei jeweils einer Zeitdifferenz (Delta_t) die Autokorrelation bei verschiedenen Abstandswerten (Delta-X) durchgeführt wird und der korrekte Abstandswert (Delta-X) bei der Autokorrelation mit einer höchsten Signifikanz erkannt wird.

7. Förder- und Messeinrichtung (7) zum Fördern und Messen eines Massenstroms (W) aus Schüttgut (4), wobei die Förder- und Messeinrichtung (7) aufweist:
eine Förderstrecke (1), die ausgebildet ist, Schüttgut (4) als Massenstrom (W) von zumindest einem Anfangspunkt (A) in einer Förderrichtung (F) bis zu einem Endpunkt (B) zu fördern,
eine Wägezellen-Anordnung (9) aus mehreren Wägezellen (8), die in der Förderrichtung (F) hintereinander angeordnet sind, jeweils eine Massebelastung erfassen und als Messwert (Mi,t, i = 1 - n) in Abhängigkeit der Zeit (t) ausgeben,
einer Auswerteeinrichtung (10), die ausgebildet ist, die Messwerte (Mi,t) in Abhängigkeit der Zeit (t) und einer Position der Wägezellen (8, Xi) in Förderrichtung (F) auszuwerten,
**dadurch gekennzeichnet, dass**
die Förderstrecke ausgebildet ist als ein Element der Gruppe, die gebildet ist aus
- einem Vibrationsförderer (18), bei dem die mehreren Wägezellen (8) in den von einer Rütteleinrichtung (19) angesprochenen Plattenelementen (20) oder als Plattenelemente (20) vorgesehen sind,
- einem Prallplatten-Förderer (16) mit einer schräg abfallenden Prallplatte (17), wobei die Messzellen (8) unter der Prallplatte (17) oder in diese integriert vorgesehen sind, wobei die Auswerteeinrichtung (10) ausgebildet ist, Messwerte (M) einer vorderen Wägezelle (8) zur Ermittlung einer Partikelmasse des auftreffenden Materials zu verwenden und weiterhin aus den nachfolgenden Wägezellen (8) das Abrutschverhalten als Fördergeschwindigkeit (v) zu ermitteln,
- einem Zellradförderer (24), der als Rotationsförderer einen Massestrom (W) an einem oberen Eingang (25) seines Gehäuses (26) aufnimmt, über einzelne Zellen (28) seiner rotierenden Trommel (29) fördert und bei einem Ausgang (30) ausgibt, wobei die Messzellen (8) an einem Gehäuse (26) und /oder an einem Flügelelement (32) seiner rotierenden Trommel (90) vorgesehen sind.

8. Förder- und Messeinrichtung (7) nach Anspruch 7, **dadurch gekennzeichnet, dass** zumindest einige der Messzellen (8) der Wägezellen-Anordnung (9) ausgebildet sind
- mit Piezosensoren und/oder Dehnungsmessstreifen, und/oder
- als Beschichtung oder Teil einer Beschichtung (35), z.B. als Sensorfolie mit einzelnen Wägezellen, und/oder
- als eindimensionales Zeilenarray oder mehrdimensionale Matrix, mit in Förderrichtung (F) aufeinanderfolgenden Wägezellen (8)..

9. Förder- und Messeinrichtung (7) nach Anspruch 7 oder 8, **dadurch gekennzeichnet, dass** eine Übertragung der Messwerte (M) und/oder von Energie von und zu den Messzellen (8) drahtlos, z.B. als NFC (Near Field Communication) und/oder mittels passiver Transponder vorgesehen ist.

10. Verfahren zum Regeln eines Materialstroms (W), bei dem
- mit einem Verfahren nach einem der Ansprüche 1 bis 6 ein Schüttgut (4) von der an dem Anfangspunkt (A) vorgesehenen Schüttgut-Zuführung (3) zu einer an dem Endpunkt (B) vorgesehenen Aufnahme- oder Verarbeitungseinrichtung (5) gefördert und vermessen wird und der Massenstrom (W) auf der Förderstrecke (1) ermittelt wird, und
- die Schüttgut-Zuführung (3) und/oder die Aufnahme- und Verarbeitungseinrichtung (5) in Abhängigkeit des ermittelten Massenstroms (W) angesteuert und geregelt wird.

11. Verfahren nach Anspruch 10, **dadurch gekennzeichnet, dass** in Abhängigkeit des ermittelten Massenstroms (W) angesteuert wird
- die Schüttgut-Zuführung (3) derartig, dass ein vorgegebener Massenstrom (W) eingeregelt wird, und/oder
- die Aufnahme- und Verarbeitungseinrichtung, deren Fördergeschwindigkeit oder Produktionsgeschwindigkeit in Abhängigkeit des Massenstroms (W) geregelt wird

12. Verfahren nach einem der Ansprüche 10 bis 11, **dadurch gekennzeichnet, dass** als Schüttgut (4) zugeführt wird
- ein Kunststoff-Material und/oder Gummi-Material, z.B. Polyethylen, Polypropylen oder PVC, und
- ein oder mehrere Additive,
wobei der Massenstrom (W) des Kunststoff-Materials und/oder Gummi-Materials und/oder der Massenstrom (W) der ein oder mehreren Additive vermessen und geregelt wird.

13. Produktionsanlage, die aufweist:
eine Schüttgut-Zuführung (3), die ausgebildet ist, ein Schüttgut (4) kontinuierlich zuzuführen,
eine Förder- und Messeinrichtung (7) nach einem der Ansprüche 7 bis9, und
eine Verarbeitungseinrichtung (5), die ausgebildet ist, das von der Förder- und Messeinrichtung (7) zugeführte Schüttgut (4) zu verarbeiten.

## Claims

1. Method for determining a mass flow (W) of bulk material (4) in a conveyor line (1), including the following steps:
- providing a conveyor line (1) including an array (9) of weighing cells consisting of a plurality of weighing cells (8) successive in a direction of transport (F) (ST1),
- continuously receiving bulk material (4),
- transporting the bulk material (4) on the conveyor line (1) in the direction of transport (F) across the plurality of weighing cells (8),
- discharging the bulk material (4) at an end point (B) of the conveyor line (1) (ST2),
- putting out measuring values (Mi,t, i=1 - Mn) of the individual weighing cells (8) as a function of time (t) (ST3),
- evaluating with comparisons of measuring values (Mi,t) as a function of time (t) and a position of the weighing cells (8, Xi) in the direction of transport (F),
- determining a mass flow (W) from the evaluation (ST5),
**characterised in that**
the conveyor line is designed as an element from the group consisting of:
- a deflector plate conveyor (16), where weighing cells (8) are provided underneath the deflector plate (17) and/or integrated therein, where measuring values (M) from a front weighing cell (8) are used to determine a particle mass of the impinging material, and further, the slippage characteristics is determined as transport velocity (v) from the subsequent weighing cells (8),
- a vibration conveyor (18), where the multiple weighing cells (8) are provided in the plate elements (20) actuated by a vibration means (19) or as plate elements (20),
- a cellular wheel conveyor (24) which, as a rotation feeder, receives a mass flow (W) at an upper inlet (25) of its housing (26), conveys it via individual cells (28) of its rotating drum (29) and outputs it at an outlet (30), where the measuring cells (8) are provided on a housing (26) and/or a blade element (32) of its rotating drum (29).

2. Method according to claim 1, **characterised in that** distance values (Delta - X) of the weighing cells (Xi) in the direction of transport (F) in relation to one another are included in the determination.

3. Method according to claim 1, **characterised in that** when comparing the measuring values (M(x,t))
- a structure or sequence of measuring values of spatially successive measuring values (Mi,t) of a first measurement at a first point in time (t0) is compared with
- at least one structure or sequence of measuring values of spatially successive measuring values (Mi,t) of a second measurement at a second point in time (t1),
and a distance value (Delta-x) of the two structures or sequences of measuring values is determined from the comparison, and
the mass flow (W) is determined from the distance value (Delta-x) and the time difference (Delta-t) between the first point in time (t0) and the second point in time (t1).

4. Method according to claim 3, **characterised in that** first a transport velocity (V) is determined from the distance value (Delta-x) and the time difference (Delta-t) and
subsequently the mass flow (W) is determined from the transport velocity (V) and the measuring values (M).

5. Method according to one of the above claims, **characterised in that** at at least two points in time (t0, t1) each a one- or multi-dimensional matrix of measuring values (Mi) is created, and
from the at least two matrixes a pattern recognition and/or a correlation, is carried out to determine matches in the structures or sequences of measuring values.

6. Method according to claim 5, **characterised in that** with one time difference (Delta_t) in each case the autocorrelation is carried out with different distance values(Delta-X), and the correct distance value (Delta-X) is recognized in the autocorrelation with a highest significance.

7. Transporting and measuring device (7) for transporting and measuring a mass flow (W) of bulk material, the transporting and measuring device (7) comprising:
a conveyor line (1) adapted to transport bulk material (4) as a mass flow (W) from at least one starting point (A) in a direction of transport (F) up to an end point (B),
an array of weighing cells (9) consisting of a plurality of weighing cells (8), arranged successively in the direction of transport (F), each detecting a mass load and putting this out as a measuring value (Mi,t, i = 1 - n) as a function of time,
an evaluation device (10) adapted to evaluate the measuring values (Mi,t) as a function of time (t) and a position of the weighing cells (8, Xi) in the direction of transport (F),
**characterised in that**
the conveyor line is designed as an element from the group consisting of:
- a vibration conveyor (18), where the multiple weighing cells (8) are provided in the plate elements (20) actuated by a vibration means (19) or as plate elements (20),
- a deflector plate conveyor (16) with a down sloping deflector plate (17), where weighing cells (8) are provided underneath the deflector plate (17) and/or integrated therein, where the evaluation means (10) is adapted to utilise measuring values (M) from a front weighing cell (8) to determine a particle mass of the impinging material, and further, to determine the slippage characteristics as transport velocity (v) from the subsequent weighing cells (8),
- a cellular wheel conveyor (24) which, as a rotation feeder, receives a mass flow (W) at an upper inlet (25) of its housing (26), conveys it via individual cells (28) of its rotating drum (29) and outputs it at an outlet (30), where the measuring cells (8) are provided on a housing (26) and/or a blade element (32) of its rotating drum (29).

8. Transporting and measuring device (7) according to claim 7, **characterised in that** at least some of the weighing cells (8) of the weighing cell array (9) are designed
- including piezo sensors and/or wire strain gauges, and/or
- as a coating or part of a coating (35), e.g., as a sensor foil including individual weighing cells and/or
- as a one-dimensional line array or multi-dimensional matrix with weighing cells (8) successive in the transport direction (F).

9. Transporting and measuring device (7) according to claim 7 or 8, **characterised in that** a transmission of the measuring values (M) and/or of energy from and to the weighing cells is provided to be wireless, e.g., as NFC (Near Field Communication) and/or by means of passive transponders.

10. Method for regulating a mass flow (W), wherein
- using a method according to one of the claims 1 through 6,
a bulk material (4) is transported from the bulk material feed (3) provided at the starting point (A) to a receiving or processing means (5) provided at the end point (B) and measured, and the mass flow on the conveyor line is determined, and the mass flow (W) in the conveyor line (1) is determined, and
- the bulk material feed (3) and/or the receiving or processing means (5) is controlled and regulated depending on the determined mass flow (W).

11. Method according to claim 10, **characterised in that,** depending on the determined mass flow (W) what is controlled is
- the bulk material feed (3) in such a manner that a prescribed mass flow (W) is adjusted, and/or
- the receiving or processing means such that its transport velocity or production speed is regulated depending on the mass flow (W).

12. Method according to one of the claims 10 through 11, **characterised in that** the following is fed in as bulk material (4):
- a plastics material and/or rubber material, e.g., polyethylene, polypropylene, or PVC, and
- one or more additives,
where the mass flow (W) of the plastics material and/or rubber material and/or the mass flow (W) of the one or more additives is measured and regulated.

13. Production facility, comprising:
bulk material feeder (3) adapted to continuously feed a bulk material (4),
a transporting and measuring device (7) according to one of the claims 7 through 9, and
a processing unit (5) adapted to process the bulk material (4) fed in from the transporting and measuring device (7).

## Revendications

1. Procédé de détermination d'un débit massique (W) de matériau en vrac (4) dans une ligne de transport (1), comprenant les étapes suivantes :
- fourniture d'une ligne de transport (1) avec un agencement (9) de cellules de pesage composé d'une pluralité de cellules de pesage (8 ; X1 - Xn) successives dans une direction de transport (F), (étape ST1),
- réception continue de matériau en vrac (4),
- transport du matériau en vrac (4) sur la ligne de transport (1) dans la direction de transport (F) au dessus de la pluralité de cellules de pesage (8),
- déchargement du matériau en vrac (4) à un point final (B) de la ligne de transport (1) (étape ST2),
- sortie des valeurs de mesure (Mi,t, i=1 - Mn) des différentes cellules de pesage (8) en fonction du temps (t) (étape ST3),
- évaluation avec comparaison des valeurs de mesure (Mi,t) en fonction du temps (t) et d'une position des cellules de pesage (8, Xi) dans la direction de transport (F),
- détermination d'un débit massique (W) à partir de l'évaluation (étape ST5),
**caractérisé en ce que**
la ligne de transport est conçue en tant qu'un élément du groupe consistant en
- un convoyeur (16) à plaque d'impact, des cellules de pesage (8) étant prévues sous la plaque d'impact (17) et/ou intégrées dans celle-ci, les valeurs de mesure (M) d'une cellule de pesage (8) avant étant utilisées pour déterminer la masse de particules du matériau impactant et le comportement de glissement étant déterminé à partir des cellules de pesage (8) suivantes en tant que vitesse de transport (v) (alter A7),
- un convoyeur vibrant (18), dans lequel la pluralité de cellules de pesage (8) sont prévues dans les éléments de plaque (20) actionnés par un dispositif vibrant (19) ou sous forme d'éléments de plaque (20),
- un convoyeur (24) à roue cellulaire qui, en tant que convoyeur rotatif, reçoit un débit massique (W) à une entrée supérieure (25) de son boîtier (26), le transporte via des cellules (28) individuelles de son tambour rotatif (29) et le délivre à une sortie (30), les cellules de mesure (8) étant prévues sur un boîtier (26) et/ou sur un élément (32) en forme d'ailette de son tambour rotatif (90).

2. Procédé selon la revendication 1, **caractérisé en ce que** les valeurs d'espacement (Delta - X) des cellules de pesage (Xi) les unes par rapport aux autres dans la direction de transport (F) sont prises en compte dans la détermination.

3. Procédé selon la revendication 1 ou 2, **caractérisé en ce que**, lors de la comparaison des valeurs de mesure (M(x,t)),
- une structure ou une séquence de valeurs de mesure de valeurs de mesure (Mi,t) spatialement successives d'une première mesure à un premier instant (t0) est comparée à
- au moins une structure ou une séquence de valeurs de mesure de valeurs de mesure (Mi,t) spatialement successives d'une seconde mesure à un second instant (t1),
et à partir de la comparaison, en particulier d'une concordance, une valeur d'espacement (Delta-x) est déterminée entre les deux structures ou séquences de valeurs de mesure, et
à partir de la valeur d'espacement (Delta-x) et de la différence de temps (Delta-t) entre le premier instant (t0) et le second instant (t1), le débit massique (W) est déterminé.

4. Procédé selon la revendication 3, **caractérisé en ce que**
une vitesse de transport (V) est d'abord déterminée à partir de la valeur d'espacement (delta-x) et de la différence de temps (delta-t), puis
le débit massique (W) est déterminé à partir de la vitesse de transport (V) et des valeurs de mesure (M).

5. Procédé selon l'une des revendications précédentes, **caractérisé en ce qu'**à au moins deux instants (t0, t1), une matrice unidimensionnelle ou multidimensionnelle de valeurs de mesure (Mi) est respectivement créée, et
à partir des au moins deux matrices, une reconnaissance de modèle et/ou une corrélation, en particulier une autocorrélation, est réalisée afin de déterminer la concordance dans les structures ou les séquences de valeurs de mesure.

6. Procédé selon la revendication 5, **caractérisé en ce que**, pour chaque différence de temps (Delta_t), l'autocorrélation est réalisée pour différentes valeurs d'espacement (Delta-X) et la valeur d'espacement (Delta-X) correcte est reconnue avec une signification la plus grande lors de l'autocorrélation.

7. Dispositif (7) de transport et de mesure pour transporter et mesurer un flux massique (W) de matériau en vrac (4), le dispositif de transport et de mesure (7) comprenant :
une ligne de transport (1) conçue pour transporter un matériau en vrac (4) sous forme de flux massique (W) depuis au moins un point de départ (A) dans une direction de transport (F) jusqu'à un point final (B),
un agencement (9) de cellules de pesage composé d'une pluralité de cellules de pesage (8) qui sont disposées les unes derrière les autres dans une direction de transport (F), chacune détectant une charge massique et la transmettant sous forme de valeur de mesure (Mi,t, i = 1 - n) en fonction du temps (t),
un dispositif d'évaluation (10) qui est conçu pour évaluer les valeurs de mesure (Mi,t) en fonction du temps (t) et d'une position des cellules de pesage (8, Xi) dans la direction de transport (F),
**caractérisé en ce que**
la ligne de transport est conçue en tant qu'un élément du groupe consistant en
- un convoyeur vibrant (18), dans lequel la pluralité de cellules de pesage (8) sont prévues dans les éléments de plaque (20) actionnés par un dispositif vibrant (19) ou sous forme d'éléments de plaque (20),
- un convoyeur (16) à plaque d'impact avec une plaque d'impact (17) en pente inclinée, des cellules de pesage (8) étant prévues sous la plaque d'impact (17) et/ou intégrées dans celle-ci, le dispositif d'évaluation (10) étant conçu pour utiliser les valeurs de mesure (M) d'une cellule de pesage (8) avant pour déterminer la masse de particules du matériau impactant et pour déterminer en outre le comportement de glissement à partir des cellules de pesage (8) suivantes en tant que vitesse de transport (v),
- un convoyeur (24) à roue cellulaire qui, en tant que convoyeur rotatif, reçoit un débit massique (W) à une entrée supérieure (25) de son boîtier (26), le transporte via des cellules (28) individuelles de son tambour rotatif (29) et le délivre à une sortie (30), les cellules de mesure (8) étant prévues sur un boîtier (26) et/ou sur un élément (32) en forme d'ailette de son tambour rotatif (90).

8. Dispositif (7) de transport et de mesure selon la revendication 7, **caractérisé en ce qu'**au moins certaines des cellules de mesure (8) de l'agencement (9) de cellules de pesage sont conçues
- avec des capteurs piézoélectriques et/ou des jauges de contrainte, et/ou
- sous forme de revêtement ou de partie d'un revêtement (35), par exemple sous forme de film capteur avec des cellules de pesage individuelles, et/ou
- sous forme de réseau linéaire unidimensionnel ou de matrice multidimensionnelle, avec des cellules de pesage (8) successives dans la direction de transport (F).

9. Dispositif (7) de transport et de mesure selon la revendication 7 ou 8, **caractérisé en ce qu'**une transmission des valeurs de mesure (M) et/ou de l'énergie depuis et vers les cellules de mesure (8) est prévue sans fil, par exemple sous forme de NFC (« Near Field Communication ») et/ou au moyen d'un transpondeur passif.

10. Procédé de régulation d'un flux de matériau (W), dans lequel
- à l'aide d'un procédé selon l'une des revendications 1 à 6, un matériau en vrac (4) est transporté et mesuré depuis l'alimentation (3) en matériau en vrac prévue au point de départ (A) jusqu'à un dispositif (5) de réception ou de traitement prévu au point final (B) et le débit massique (W) est déterminé sur la ligne de transport (1), et
- l'alimentation (3) en matériau en vrac et/ou le dispositif (5) de réception et de traitement sont commandés et régulés en fonction du débit massique (W) déterminé.

11. Procédé selon la revendication 10, **caractérisé en ce que**, en fonction du débit massique (W) déterminé, il est commandé
- l'alimentation (3) en matériau en vrac de manière à réguler un débit massique (W) prédéfini, et/ou
- le dispositif de réception et de traitement, dont la vitesse de transport ou la vitesse de production est régulée en fonction du débit massique (W).

12. Procédé selon l'une des revendications 10 à 11, **caractérisé en ce que**, en tant que matériau en vrac (4), est alimenté
- une matière plastique et/ou un matériau caoutchouc, par exemple du polyéthylène, du polypropylène ou du PVC, et
- un ou plusieurs additifs,
dans lequel le débit massique (W) de la matière plastique et/ou du matériau caoutchouc et/ou le débit massique (W) des un ou plusieurs additifs sont mesurés et régulés.

13. Site de production comprenant :
une alimentation (3) en matériau en vrac conçue pour alimenter en continu un matériau en vrac (4),
un dispositif (7) de transport et de mesure selon l'une des revendications 7 à 9, et
un dispositif de traitement (5) conçu pour traiter le matériau en vrac (4) alimenté par le dispositif (7) de transport et de mesure.
